# EUROPEAN PATENT APPLICATION

(11) **EP 1 146 682 A2**
(43) Date of publication of application: **17.10.2001**
(21) Application number: 01302630.7
(22) Date of filing: 21.03.2001
(51) Int. Cl.: H04J 14/02

(54) **Two stage, hybrid logical ring protection with rapid path restoration over mesh networks**

(30) Priority: 29.03.2000 US 537685
(71) Applicant: Nortel Networks Limited, Montreal, Quebec H2Y 3YF (CA)
(72) Inventor: Wang, Guo Qiang Q., Nepean, Ontario K2J 4L2 (CA); Felske, Kent E., Kanata, Ontario K2L 3V6 (CA); Gruber, John G., Orleans, Ontario K1C 2G1 (CA)
(74) Representative: Jones, Keith William

(57) **Abstract**

A system and a method of combining logical ring protection and mesh restoration mechanisms for recovery from link and node failures in optical networks is provided. Logical rings, or pre-configured protection cycles are defined over the physical mesh optical network for protection purposes, and they are operational only in transient time. A Wavelength Routing Protocol (WRP) and a Wavelength Distribution Protocol (WDP) have been devised to support network-wide routing and signalling. When a switch detects a link failure, the traffic being protected is bridged to the logical ring first, then the switch sends failure notifications to all the other nodes via the WRP. After receiving notification, all nodes being affected by the failure re-calculate and re-configure new globally optimized restoration paths via the WDP protocol, to eventually re-direct the traffic into such a new path. Node failure is addressed through a diversity path restoration operation. By combing logical ring protection and mesh path restoration, both fast protection speed and bandwidth efficiency are achieved.

## Description

### BACKGROUND OF THE INVENTION

### Field of the Invention

The present invention relates in general to self-healing networks in a synchronous environment, and in particular to a hybrid logical ring protection with rapid path restoration over mesh networks.

### Background Art

### Network configurations

Ring and mesh networks are currently the predominant architectures used for the data transport networks. A ring is a bidirectional network connecting the nodes in a physical loop configuration, with working and protection capacity (bandwidth BW) on all links between any two nodes. The conventional ring architecture is designed with little dependence on, or awareness of, adjacent rings, and with sufficiently restricted geographical scope in order to achieve high availability and to provide fast speed protection switching.

The term "node" is defined herein as an entity comprising ports to receive and to deliver traffic, and a management unit. The management unit has the capability of controlling routing of the signals inside the node. Depending on the requirements, a node may process the traffic, or simply transfer it.

In a single ring type network, re-routing of the traffic towards the opposite direction in the case of a failure is known as a "negative feedback loop". The traffic is looped back ("bridged") using the spare capacity, or protection BW, and then re-connected to the working capacity ("switched"). A 'span' is a set of all working and spare links in parallel between adjacent nodes.

In a path-switched ring (unidirectional path switched rings - UPSR), the traffic is protected on a per path basis and the switching is based on the health of each individual path. A 'path' is a SONET/SDH term for the connection between two path terminating nodes-PTE, such as add-drop multiplexers (ADMs), routers, bridges, private branch exchanges (PBXs), switches, etc., for transporting services such as DS1 (digital system) or DS3. In case of a path protection switching operation, the entire path is moved (i.e. 'switched') over a protection path provisioned all the way between the path terminating (PTE) nodes.

In a line-switched ring (bidirectional line switched ring - BLSR), switching is based on the health of the line between each pair of line terminating (LTE) nodes. The SONET line (or the SDH multiplex section) sublayer provides synchronization and multiplexing for the path layer between LTE's, such as ADMs or terminals. When a line is faulty, the traffic is switched over a protection line at the failure's boundary.

The transport capacity required to accommodate high growth is being provided by lately using wavelength division multiplexing (WDM), or dense wavelength division multiplexing (DWDM). A wavelength is an end-to-end optical channel, or circuit of the same frequency from source to destination across a network. In practice, to achieve long reach and to avoid wavelength blocking, a wavelength may change frequency through regeneration and/or wavelength translation.

DWDM provides increasingly higher capacity, longer reach, and lower cost per bit/mile. As a result of this growth, the cost center of network moves from transport to the nodes, even in long-haul networks. To remain competitive and flexible, service providers require scalable solutions with high speed deployment of services. The service and cost considerations, along with the technology advances are driving conventional multi-layer, multi-protocol networks down to two layers, namely the Optical internet, comprising a packet layer (service layer) and an optical network (physical layer).

All optical networks, or advanced optical networks (AON) are wavelength routed networks. DWDM is increasingly a key contender for this new architecture, as it is a scalable, robust and low cost underpinning for the packet layer.

As a consequence of increased traffic demands and tremendous growth of the Internet, the transport network architecture evolves from ring and linear configurations to mesh configurations.

Mesh network can have an arbitrary topology while servicing a large geographical area. Mesh networks may also have high connectivity, with nodes that can be '3-, 4-, or 5-connected', relative to rings where all nodes are 2-connected (i.e. each node is connected to one upstream and one downstream node). A 'n-connected' node is one with 'n' spatially diverse routes emanating from that node.

Compared to ring networks, the mesh networks are very flexible, with increased bandwidth efficiency, feasibility, and business viability. Mesh networks are easier to plan and to upgrade, and more open to end-to-end wavelength networking.

Mesh networks may also have constrains, but they are generally much simpler than those for the current networks. For example, the mesh architecture may be imposed by geography, pre-computed routes, hop limits, hierarchies, domains, systems of rings, etc. Nonetheless, such constrained mesh networks are generally simpler in design and operation, and faster to recover from failures compared to conventional mesh networks, at the expense of less flexibility and BW efficiency.

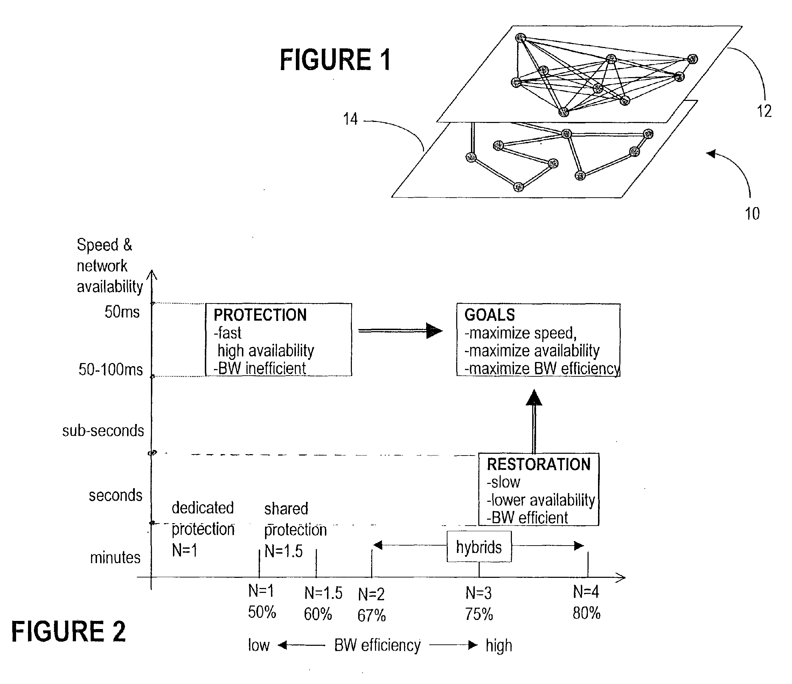

Figure 1 illustrates a mesh network at **10** having a physical layer **14** and a logical layer **12.** The nodes are illustrated by circles, and the optical network connection (DWDM spans) are shown in double lines to suggest a plurality of wavelengths (channels), while the service layer connectivity is shown in thin lines.

The physical layer **14** provides the support for wavelength networking. In long-haul networks especially for cost reasons. The optical fiber infrastructure, or the physical layer **14** tends to have thin connectivity relative to higher layers, or the logical layer **12** of network **10.** Network **10** may be the Optical Internet, which is a simplified and cost effective model, but nevertheless scalable and sufficiently functional. In this case, the physical network may be a D/WDM optical transport network and the logical network may be an IP network, with data terminals at each node.

Optical Internet **10** is for example, a fully connected network, where each data terminal at a node is connected to data terminals at all other nodes.

### Network reliability versus bandwidth demand

Network users and providers are looking for reliable networks at acceptable bandwidth (BW) cost. Reliability is the ability of the network to carry the information from source to destination with errors below a certain threshold. Network availability estimates how efficient is the recovery of the network in case of a failure, i.e. the time when an end-to-end connection is not in a failed state. For example, 99.999% availability corresponds to about 5 minutes of down time of a network per year.

Network recovery comprises the actions taken by the nodes when a network is partially defective and the signals are no longer being sent out accurately. For recovery purposes, the routing of the signals is modified to ensure that they are sent as far as possible, to every non-defective node for which they are intended. Protection and restoration are two methods for recovering from a transmission failure.

Figure 2 is a graph illustrating the protection speed and the network availability over bandwidth efficiency. Protection is, in general, a physical layer traffic preserving strategy, which provides for reserved bandwidth (BVV) to be used in case of a fault. Automatic protection acts quickly enough to ensure that the user's connections remain unaffected by failures. Protection switching times are less than 200ms. On the other hand, since the reserved BW is most of the time idle, current transport networks are often 100% overbuilt. Furthermore, most protection schemes require high speed signaling.

SONET/SDH technology, which is a physical layer technology, is provided with very effective and fast protection mechanisms. Protection protocols for SONET/SDH networks are designed for various network configurations, such as linear (1+1; 1:1 and 1:N), where N gives the number of working links that share one protection link, in ring networks. The protection switching mechanisms also differ according to the sublayer - the line sublayer uses different protocols than the path sublayer. Thus, 1+1, UPSR and 1:1 schemes require 100% redundancy. As shown in Figure 2, BW efficiency for dedicated protection 1:1 is at a low 50%. As N increases, the BW efficiency increases as well.

As shown in Figure 2, the bandwidth efficiency in a network increases from ring-like dedicated protection, to shared protection, and to hybrid network restoration. In a shared protection with N=1.5, the bandwidth efficiency raises to 60%. For N=2, the recovery function shifts from protection to restoration which is a slow process, with lower availability, but most important with high bandwidth efficiency. Accordingly,1:N, 2F (two-fiber) - BLSR and 4F-BLSR schemes require less than 100% network overbuild.

Also shown in Figure 2 are protection switching times for linear and conventional ring-type networks. These networks have fast protection speed (50 ms) and high availability.

For packet networks, such as Internet (IP) networks which are provided with traffic restoration mechanisms, setting aside a significant proportion of BW for protection is considered wasteful and not cost effective. Even if physical layer network does not provide protection in the event of a failure, the IP network is still able to re-route around the problem.

Restoration includes automatically rerouting the traffic when a transmission failure occurs in a node or in a transmission line blocking traffic on the respective path. It is to be noted that re-routing of the damaged traffic affects the service and the global optimization of the network. The restoration operation comprises the steps of failure detection, notification, and the recovery process itself. Each time a node detects a fault, an exchange of messages with other nodes in the network takes place to identify an alternate route, or the restoration route, for redirecting the affected traffic. As a result, the restoration times are typically much greater than the protection times. As shown in Figure 2, for a conventional IP network, a restoration mechanism, such as the open shortest path first (OSPF) needs 30 to 45 seconds to reroute the traffic after a failure. Such delays are not any more acceptable.

On the other hand, in a mesh network, the customer has the choice to select a convenient degree of protection, or not to choose protection at all. Mesh networks also provide for a highly shareable link resource protection, and the choice of selecting an optimized path for re-routing the affected traffic. This makes mesh restoration more efficient than linear or conventional ring protection systems.

Another advantage of a mesh configuration over linear and ring configurations is that no dedicated protection bandwidth is necessary, so that the network may be over-engineered in capacity by up to 40% in some scenarios.

As shown in Figure 2, mesh networks are slower to restore, and offer less network availability. Generally, mesh networks offer 1:N efficiency and provide 100N/(N+1)% working bandwidth and 100/(N+1)% restoration bandwidth on each link. Mesh networks can offer more than 50% bandwidth efficiency by providing more than 50% working bandwidth. Bandwidth efficiency [100N/(N+1)%] in a mesh network increases as N increases.

In contrast, mesh network's availability, or bandwidth efficiency decreases with N but not in a straightforward manner. The availability of the network depends on the complexity of mesh networking, and also on how restoration bandwidth is distributed throughout the network. As a general rule, N should be kept small enough to at least recover all traffic as rapidly as possible from any single failure within a mesh.

For example, in a "c-connected" node of an optical network, where c=4, having equal working capacity on three wavelengths, the restoration bandwidth needed on each of the four links outputting from this node is [1/(c-1)] x 3 = 1 wavelength. This corresponds to a mesh networking architecture with N =(c-1) = 3 working links and one restoration link, or (1:3) ratio of restoration to working bandwidth on each link.

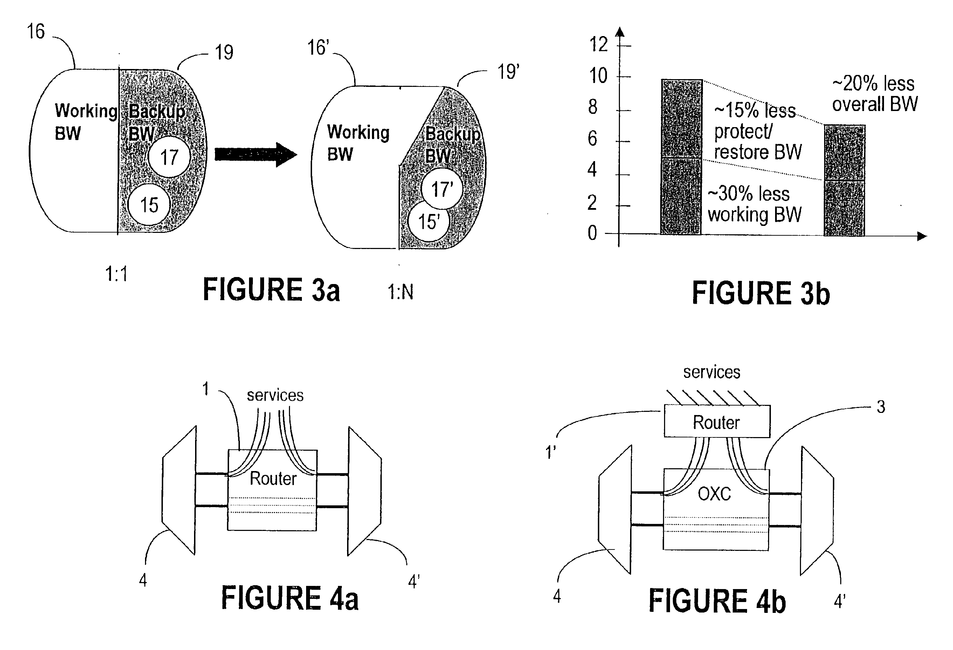

A comparison between separate protection and restoration functions, as well as a comparison between mesh and ring networks in terms of bandwidth efficiency are shown in Figures 3a and 3b, respectively. The total bandwidth of a linear type or ring type network (1:1) includes working bandwidth **16** which is equal to protection bandwidth **19,** as shown in Figure 3a. This network offers disjoint protection **15** and restoration **17** functions. As also shown in the pie chart of Figure 3a, in a shared (1:N) mesh-like protection/restoration **15'/17'** design, the working bandwidth **16'** is increased.

Mesh-like restoration for the relatively highly connected super-POP tier of long haul networks can be 20 to 40% more efficient than conventional ring-like protection, depending on the network size, network connectivity, and on the traffic demand pattern. More than 20% savings in overall bandwidth are obtained for a not too large, i.e., regional network of hundreds of Km in diameter, and with a not too aggressive connectivity, i.e. up to at most "4-connected" nodes. The chart of Figure 3b shows the relative trunk bandwidth savings for a mesh type network compared to a conventional ring type network in a regional network with 17 nodes and '2- connected' to "'4-connected' nodes. The savings in working bandwidth are approximately 30%, the savings in protection and restoration bandwidth amount to 15%, with 20% overall bandwidth savings.

Nation wide networks of thousands of Km's in diameter and with more aggressive connectivity (up to "6-connected" nodes) can provide at least 40% in bandwidth savings.

Table 1 shows recovery time comparison between conventional ring protection, logical ring shared protection/restoration, and mesh-like restoration. As seen in Table 1, logical rings with shared protection offer low recovery time, whereas the recovery time for mesh-type networks is high.

The goal is to achieve ring-like restoration speed, and mesh-like bandwidth utilization. The target for mesh-like restoration should be to restore within 50 ms, which is similar to that for linear and ring-like protection, though restoration in hundreds of milliseconds may be sufficient for some applications.

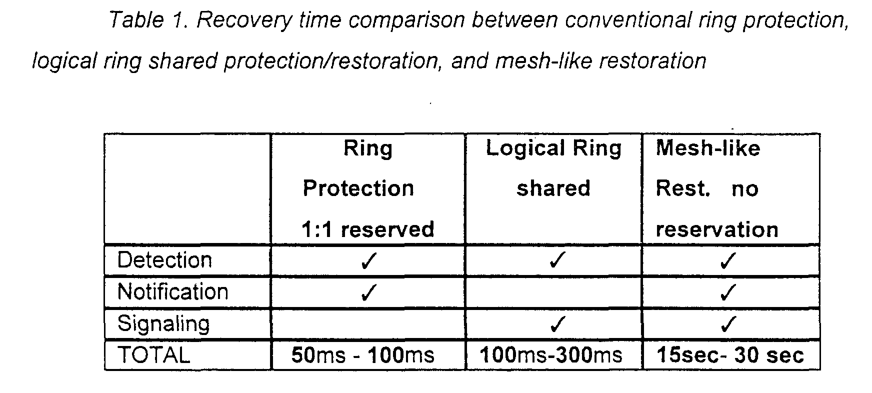

To achieve these goals, a process with a global view over the network for finding backup capacities, activating the P-cycles, and dynamically redirecting the damaged traffic is needed.

To summarize, optical networks are required to provide appropriate protection or restoration options corresponding to different services (SLA's) and at various costs. Protection means recovering from failure without affecting the service, while restoration means recovering from failure by affecting the service and the global optimization.
Protection usually provides fast recovery and high network availability, and often does not require global notification. On the other hand, protection requires pre-reserved BW. But increasing the transmission capacity of a network becomes more and more important to network providers, and so becomes the cost of the bandwidth. Wise use of the BW is not any more an option; it increasingly becomes an important issue.

Restoration usually provides globally optimized rerouting with slow recovery speed. On the other hand, restoration is more BW efficient than protection. There is a trend to provide an optimized ring-mesh networks to exhibit properties of both mesh and ring networks and allow carriers to offer a wide spectrum of services with guaranteed Service Level Agreements (SLA).

There is also a trend to provide a communication system, which provides a better use of BW, while ensuring an acceptable level of reliability. Optical networks need a well-defined protection/restoration strategy to provide reliable, efficient, shareable and flexible recovery mechanisms from network failure.

Accordingly, there is a need for a recovery function for IP-centric networks combining ring-like protection speed and low cost mesh-like bandwidth efficiency.

### SUMMARY OF THE INVENTION

There is an object of the present invention to provide a two-stage hybrid recovery over mesh networks, which alleviates totally or in part the drawbacks of the prior art.

It is another object of the invention is to provide a hybrid recovery function for mesh networks by combining protection with restoration. According to the invention, the end-nodes of a failed transmission link perform the recovery process in two stages. Protection is performed immediately, whenever a failure is detected, by activating a protection path in a pre-configured logical ring formed out from previously unconnected spare links. Restoration is subsequently performed by the IP network (the routers), for re-directing the traffic in a globally optimized restoration path. Finally, the original path and the protection logical ring are released. Wavelength networks can satisfy the IP protection/restoration service requirements, as they can quickly disable protection and offer a diversity of routes for Level 2/3 restoration, while providing increased bandwidth efficiency.

A further object of the invention is to provide a high shareable link resource protection, based on a centralized bandwidth capacity management policy. Smart agents are provided on each optical switch to locally configure and co-ordinate the protection and restoration operations. They also support inter-layer protection/restoration co-ordination.

Still another object of the invention is to provide a hybrid recovery function for wavelength networks using a wavelength routing protocol (WRP) and a wavelength distribution protocol (WDP) for optical network routing and signalling.

According to one aspect of the invention, a method of restoring the traffic in synchronous optical networks by dynamically reconfiguring the cross connect when a transmission failure occurs between the end-nodes of a transmission link in a communications path, is provided/. The method comprises configuring protection logical rings and dividing the network in a plurality of protection sub-networks such that each node in the network is ascribed to at least one protection logical ring; activating said ascribed protection logical ring whenever a failure occurs, whole dynamically routing the damaged traffic into the ascribed protection logical ring; performing centrally controlled network-wide restoration by calculating new globally optimized restoration paths for re-directing the damaged traffic into a new path selected from said globally optimized restoration paths; releasing the original path and the protection logical ring; and configuring new protection logical rings based on new network topology and bandwidth availability updates.

According to another aspect of the invention, a fast wavelength switch (FWS) for a smart optical DWDM transport network carrying traffic between data terminals of a service network, is provided. The FWS includes an optical cross-connect (OXC) for directing incoming and outgoing traffic on a plurality of links according to a provisioned connectivity plan, an optical network-to-network interface (ONNI) for dynamically reconfiguring the connectivity plan according to the current operating conditions of the network, and an optical user-network interface (O-UNI) for inter-working between the transport network and the service network.

According to a still further aspect of the invention, an optical network for dynamically reconfiguring the cross connect when a transmission failure occurs between the end-nodes of a transmission link in a communications path, is provided. The network includes a protection cycles planner (P-planner) to configure protection logical rings for dividing the network in a plurality of protection sub-networks such that each node of said network is ascribed to at least one protection logical ring, and performing network-wide restoration by calculating new globally optimized restoration paths for redirecting the damaged traffic into a new path selected from said globally optimized restoration paths, and an optical switch including smart agents for interpreting said P-planner configurations and coordinating connection management for activating the ascribed protection logical ring whenever a failure occurs and dynamically routing the damaged traffic into the ascribed protection logical ring.

An advantage of the present solution is a significant increase in the recovery speed of the network, since the response to a fault is addressed initially locally, during ring-like protection switching times. The recovery operation involves the entire network by propagating the decisions to all nodes.

The invention provides a cost effective and flexible method allowing the customers to choose a convenient degree of protection in a variety of network topologies like point-to-point, ring, or mesh. The low priority traffic can be preempted on demand to accommodate high priority traffic.

The "Summary of the Invention" does not necessarily disclose all the essential features for defining the invention which may reside in subcombinations of the disclosed features.

### DESCRIPTION OF THE DRAWINGS

The invention will be now explained by way of example only and with reference to the following drawings.
**Figure 1** illustrates the optical and service layers of a mesh network;
**Figure 2** is graph illustrating speed and network availability over bandwidth efficiency, for various types of networks;
**Figure 3a** is a pie chart illustrating the increase in working bandwidth in shared protection networks;
**Figure 3b** is a graph illustrating the bandwidth efficiency of mesh networks over conventional ring networks;
**Figure 4a** shows a node with all traffic processed by the data terminal;
**Figure 4b** shows a node using optical wavelength networking for data terminal by-pass;
**Figure 5** illustrates 'smart' wavelength connectivity enabled by OXC's and OADM's;
**Figures 6a-d** show the control structure required to enable router inter-working with a wavelength routed network: Figure 6a illustrates a packet centric network with wavelength patching; Figure 6b shows a quasi-smart optics with wavelength provisioning; Figure 6c illustrates smart optics with wavelength routing; and Figure 6d shows optical inter-working;
**Figure 7** shows a smart optical network which provides agile wavelength switching between two data terminals;
**Figure 8** is a block diagram of a reference model for the optical layer of network of Figure 7;
**Figure 9** illustrates the diverse link protection method for a 3-diversity P-cycle network;
**Figure 10** illustrates the principle for the diverse path restoration method; and
**Figure 11** is a flow chart illustrating a hybrid logical ring protection with rapid path restoration over mesh network, according to the invention.

Similar references are used in different drawings to denote similar components.

### DESCRIPTION OF THE PREFERRED EMBODIMENTS

The following description is of a preferred embodiment and by way of example only, without limitation to the combination of features necessary for carrying the invention into effect.

Current wavelength routed networks have node configurations as shown in Figure 4a. The node comprises the optical add-drop multiplexers (OADMs) **4** and **4'** for optical add/drop in the East and West directions, and the data terminal (IP router) **1.** In this configuration, both terminating and passthrough traffic is processed by the data terminal **1.** Therefore, the nodes require high capacity routers, since both terminating traffic and passthrough traffic must be processed by all intermediate (tandem) IP routers. Sites in backbone networks can have significant amounts of passthrough traffic (e.g. 30-70%).

If node configuration is changed to have the passthrough traffic transiting the intermediate sites on optical platforms, a significantly less costly node that the router-centric one is obtained. Such an architecture is shown in Figure 4b. In this case, an optical cross-connect (OXC) **11** switches the wavelengths between the East and West OADMs **4, 4'** and router **1,** so that the router **1** processes only the terminating traffic. This is called the 'smart optics' approach .

OXC deployment is a step in the direction of mesh networking. The OXC can then be deployed to provide a more scalable, robust, and cost effective node architecture. As a result, IP router scaling can be eased (note the smaller sized router **1** in Figure 4b than in Figure 4a). The use of routing protocol and algorithms, has the advantage of enabling fast end-to-end wavelength networking for recovery and improved service speed. Smart OXCs also serve as a platform for functional integration of connection and network management, protection and restoration, and OADM's.

However, when using wavelength routing and distribution protocols at the optical layer, it is more appropriate to re-define the OXC **3** as a fast wavelength switch, or agile wavelength switch, or a smart OXC, which has more stringent speed, timing and control requirements than the conventional OXCs.

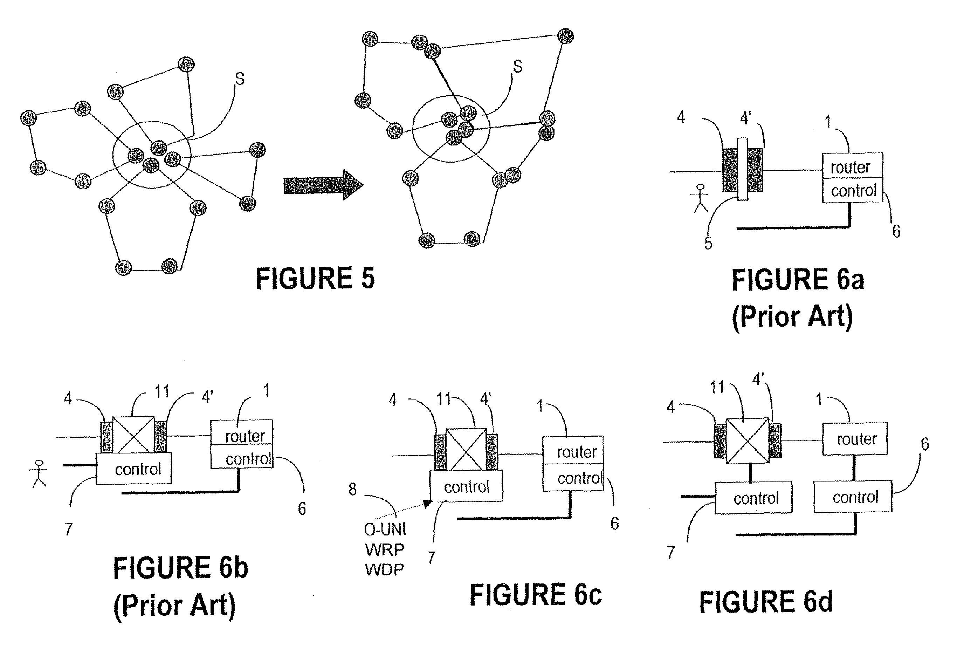

This functional integration enables the smart OXCs to translate networks from ring to mesh as well as to accommodate hybrid ring-mesh networks. The use of smart OXCs also reduces the element count at a node. Figure 5 shows a network that evolved from a plurality of rings, having nodes at a common site **S,** into a mesh network, where the ring links which have common end-sites are collapsed in one connection.

Smart optics brings intelligence to existing relatively simple point-to-point wavelength connection management and restoration. The intelligence is manifested locally in the optical add-drop multiplexers (OADMs), and network-wide in OXCs, or wavelength switches, as well as in associated management and control systems. The main driver for smart optics are high volume of switched traffic, high growth of the transport node, data pipes from service platforms, such as large IP routers, etc. These data pipes have an end-to-end nature, i.e. from end-router to end-router, or from a point of presence (PoP) to another PoP across a carrier network. The pipes are also coarse enough to be candidates for direct launching into wavelengths. Namely, if the pipe is 10Gb, a single wavelength may be used to carry it end-to-end, which means that intermediate nodes need not access the pipe.

On the other hand, these pipes need fast, flexible service responsive end-to-end wavelength connection management, need to be remotely provisionable and reconfigurable, to be rate/protocol independent, and also require performance and fault management capabilities.

Figures 6a-d show the control structure required to enable router inter-working between the packet network and the wavelength routed network. Figure 6a illustrates a packet centric network with wavelength patching. The node has a router **1** with its control entity **6** operating at the service layer, and the optics operating at the physical, optical layer. The optics comprises the OADMs **4** and **4'** for the West to East traffic, and a patch panel **5** where the wavelengths are provisioned manually. Reconfiguration of the wavelengths in the network takes a long time for this configuration (about a month).

Figure 6b shows a quasi-smart optics node with wavelength provisioning, where the patch panel was replaced with a fast wavelength switch **11.** Both the router **1** and switch **11** are provided with control units **6** and **7,** respectively. These control entities **6** and **7** are added to enable remote semi-automated provisioning of wavelengths. This type of wavelength provisioning is available in vendor-specific management systems today, and may provide response times in the order of days to seconds.

The control structure required to implement a fast-provisionable mesh optical network using wavelength routing and distribution protocols is represented in Figure 6c. This architecture provides OXC based wavelength routing and distribution protocols in the form of an optical user-network interface O-UNI **8.** Figure 6d adds an interface between the control entities **6** and **7** of the optical and packet networks to facilitate optical interworking.

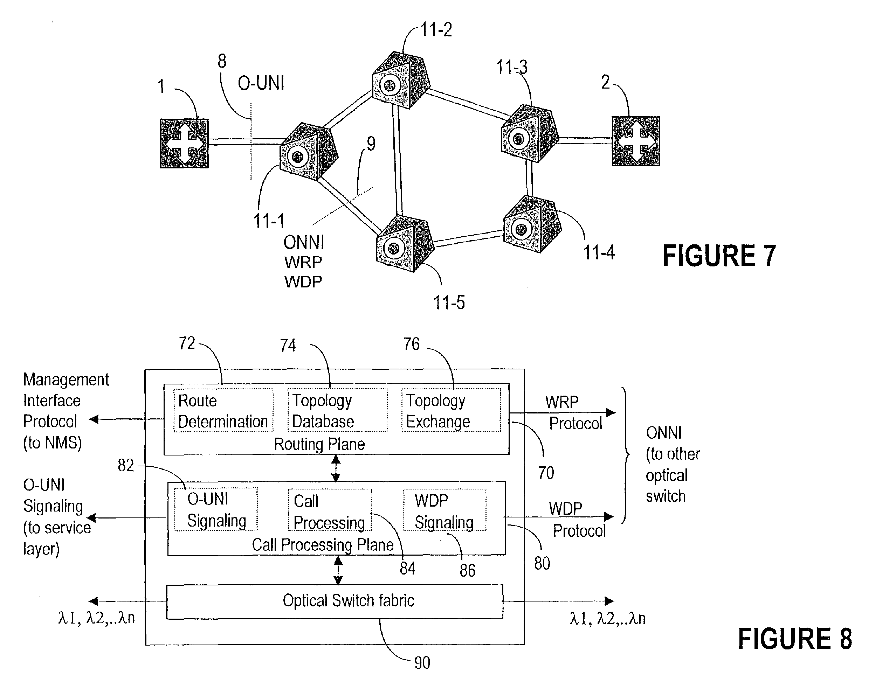

Figure 7 shows a smart optical network which provides wavelength switching between two data terminals, routers **1** and **2.** The fast wavelength switches **11-1** to **11-5** are connected in a WDM network, which transports a plurality of wavelengths on each span. While the optical network has low physical connectivity, a good wavelength plan may connect each node with all remaining nodes (fully connected network).

The symbol for the fast wavelength switch is different from the symbol for the OXC because as discussed above in connection with Figures 6a-6d, the switch **11** is provided with intelligence which allows the use of dynamic wavelength routing and distribution protocols.

Packet and optical layer inter-working is defined as control and management sharing of information between the formal OSI layers 1 to 3. Smart, or control agents contain shared network topology and link state information, and have the ability to initiate appropriate, coordinated actions over all layers. This has value to network operators because the close coupling of the optical and packet layers enables a new set of functions (or "network applications") that can reduce operating costs, capital costs, and create new revenue opportunities. The following three examples illustrate this point.

First, a node experiencing congestion (or low traffic) over a link could simply request more bandwidth (or less) from the smart optical network, which could facilitate the request by the addition of new protection wavelength paths set up via distribution/routing (WDP/WRP) protocols, described later. This dynamic re-engineering provides for increased quality of service (QoS) by optimizing infrastructure usage.

As a second example, suppose the network operator must ensure diverse routes between two nodes. Packet and optical layer inter-working could provide a common topology view and common rules to ensure that diversity routing is provided.

The final example is using packet-optical inter-working for borrowing optical bandwidth allocated to the best-effort traffic. In general, a signaled high-holding traffic priority has a lower chance to be preempted, and provides expectations that if resources are unavailable, the high priority is more likely to preempt other paths and get set up. Due to inter-working capabilities, the high priority traffic is immediately and automatically accommodated providing for higher revenue.

Two protocols, called the Wavelength Routing Protocol (WRP) and the Wavelength Distribution Protocol (WDP), and their main functions have been devised for supporting dynamic routing and signaling for rapid recovery over mesh networks, according to the invention.

Dynamic resource allocation in optical networks, allows for rapid protection and restoration capabilities in order to recover from network failures. In DWDM networks, the main resource is the wavelength. In this case, resource allocation amounts to setting up end-to-end wavelength connections between sources and destinations.

One way to rapidly set up wavelengths through a DWDM network is to use signaling together with dynamic routing. Routing is used to collect network topology and resource information, and to compute wavelength routes. Signaling is used to allocate resources and to setup, maintain and tear down wavelengths.

To achieve a unified packet in an optical switched network architecture, existing well-defined industry standard routing and signaling protocols may be leveraged together with specific requirements of the wavelength routed network. Alternative protocols may include Open Shortest Path First (OSPF), Intermediate System - Intermediate System (IS-IS), Private Network-Network Interface (PNNI) and Multi-Protocol Label Switching/Label Distribution Protocol (MPLS/LDP). Yet another possible approach is Signaling System Seven (SS7) which is used in voice networks.

The Wavelength Routing Protocol (WRP) supports routing in optical switched networks, and comprises two main components. First, the protocol obtains the information needed to compute or select wavelength routes. Secondly, wavelength routes capable of meeting a user's type of service request (SLA) are computed, or selected.

The WRP protocol is based on the OSPF protocol, which is a L-3 routing protocol, with the extensions of wavelength management and information on the status of available wavelengths and interfaces on each link. To support dynamic resource allocation and connectivity provisioning, the major extension in WRP includes new types of Link State Advertisement (LSAs) to distribute availability of wavelengths and interface service information. In addition to topology changes, any other significant change of bandwidth, i.e. the number of available wavelengths, would cause this new LSAs to be activated. The WRP protocol may also support per wavelength inter-nodal 'Hello' adjacencies to monitor the status of multiple wavelengths over the physical link.

The WRP protocol can provide optical network physical level protection and restoration for recovery from link and node failures. The network-wide restoration and restoration capabilities of the WRP are complementing the optical physical layer linear and ring protection methods. The OSPF may also be updated to account for available bandwidth information when it generates the shortest paths for each node. Other routing algorithms and criteria such as least cost, least delay, preferred route, optimized route, etc., could also be used. With these extensions, the WRP protocol can support Generic Call Admission Control and on-demand routing. The WRP protocol runs on the optical network-network interface **9,** shown in Figure 7.

The Wavelength Distribution Protocol (WDP) is similar to MPLS/LDP (multi-protocol label switching/label distribution protocol), with the extension of new Type, Length and Value (TV) information, and related procedures. WDP is a signaling protocol defined to setup, maintain, and release wavelength paths in an optical network. Similar to LDP, WDP treats wavelengths as labels. The main function of WDP is connection management by wavelength grouping and mapping (label banding) according to combinations of destination addresses and service type information, i.e. according to the optical Forwarding Equivalence Classes (FEC). The WDP distributes these label bands with each optical FEC and can create various types of connections, one being the Explicitly Routed (ER) path as defined in the Constraint-based Routing LDP (CR-LDP) protocol. CR-LDP is believed to be an efficient solution for core network traffic engineering as regards the quality of services (QoS), path optimization, flexibility, and failure recovery. In addition to its standards orientation, the advantage of WDP is that it could be applied to both optical circuit switching and to optical packet switching.

To control DWDM layer bandwidth from the IP service layer, the inter-working functions between IP service layer routing and signaling (e.g. OSPF and MPLS/LDP) and optical layer WRP/WDP is defined over an optical-user network interface (O-UNI), shown in Figures 6c and 7, at **8.** The main inter-working functions include optical resource management co-ordination and optical connection control. In this way, the optical layer resource information and related updates could be propagated to the IP service node. By utilizing this information, the IP layer could control optical bandwidth allocation in response to traffic changes, provide traffic engineering, and co-ordinate and prioritize policy-based, inter-layer protection.

Figure 7 also shows the optical network-network interface (ONNI) **9** between the fast wavelength switches **11-1** to **11-5.** WRP and WDP protocols run on interface **9.**

Figure 8 is a block diagram of a smart optics reference model (e.g. the optical layer of network shown in Figure 7). The model includes a routing plane **70,** a call processing plane **80,** and an optical switch fabric **90.** The routing plane **70** includes a topology database **74** which stores network-wide topology, and optical link states, including wavelength availability information. Routing plane **70** also include a route determination block **72,** and a topology exchange **76.** WRP is the protocol running on the ONNI **9.**

The call processing plane **80** includes a connection management or call processing block **84,** a WDP signaling block **86,** and inter-working functions block **82** for the O-UNI **8** protocol operating between the physical and the packet layer. The optical switch fabric plane **90** can conduct wavelength switching with an electrical fabric surrounded by optical-electrical-optical conversion, or eventually with a pure optical (photonic) fabric.

Known protection/restoration methods are: (1) "fast non-diverse point-to-point protection" for wavelengths over the same link, also called 'span switching'; (2) 'fast diverse link protection'; and (3) 'diverse path restoration'.

The point-to-point protection, or span switching, is a non-diverse (1:N) linear protection approach for wavelengths on the same link. One protection wavelength is designated to protect against failures, or to accommodate scheduled maintenance on any one of the remaining N working wavelengths.

Diverse link protection includes a pre-configured protection cycles (P-cycles) step, which provides a 'fast like a ring, cheap like a mesh' protection solution. P-cycles are ring-like cyclic paths planned over the physical network, and formed out from previously unconnected spare links. P-cycles are dynamically generated and optimized based on bandwidth availability and network topology, such that each link in the network belongs to at least one P-cycle and consequently, each node is also located in at least one P-cycle.

Each node in a P-cycle learns in advance which end-to-end connection is needed for each prospective failure. P-cycles are re-configurable compared to rings which are essentially hardwired in place within the network. In addition, a P-cycle protects also the straddling links, whereas the ring protects only failures on the spans of the same ring.

By definition, for each failed link, there must exist at least two alternate paths for protection purposes in a mesh network. In a k-diversity P-cycle bidirectional network, the protection bandwidth for providing full network protection is 1/k, and the working bandwidth is (k-1/k). The reserved protection bandwidth is shared by multiple links. These links may be either on-cycle links, or off-cycle straddling links. An improved bandwidth efficient protection mode is provided.

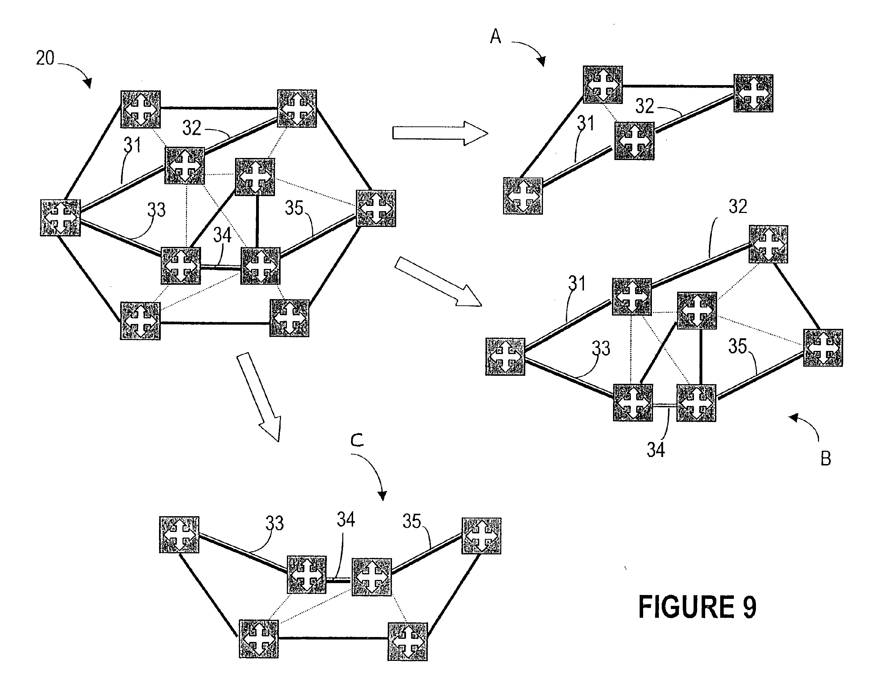

Figure 9 illustrates a 3-diversity P-cycle network in a granular network **20** with an arbitrary network topology with 50-100 ms recovery time potential. P-cycles **A, B, C** have shared links **31-32,** and **33, 34, 35,** for performing a shared protection/restoration function. The bandwidth savings for a 3-diversity P-cycles network (3D saving) reflect an increase in the working bandwidth from 1/2 as in a ring-type network, to 2/3 with a protection backup of 1/3 on each link, as it was also discussed in connection with Figures 3a and 3b.

The P-cycles method can provide fast protection for link failure at "ms" speed, mainly due to two factors: the restoration paths are configured in advance (pre-configured), and the decision to switch-over is received from the end-nodes of the failed link and therefore, is kept locally. However, the P-cycles scheme does not address node failures. This is addressed by diversity path restoration schemes.

The diversity path restoration includes a P-cycle planner designed to use heuristic algorithms to dynamically pre-calculate protection paths based on network-wide topology and BW usage, and to configure these paths for each switch via smart agents.

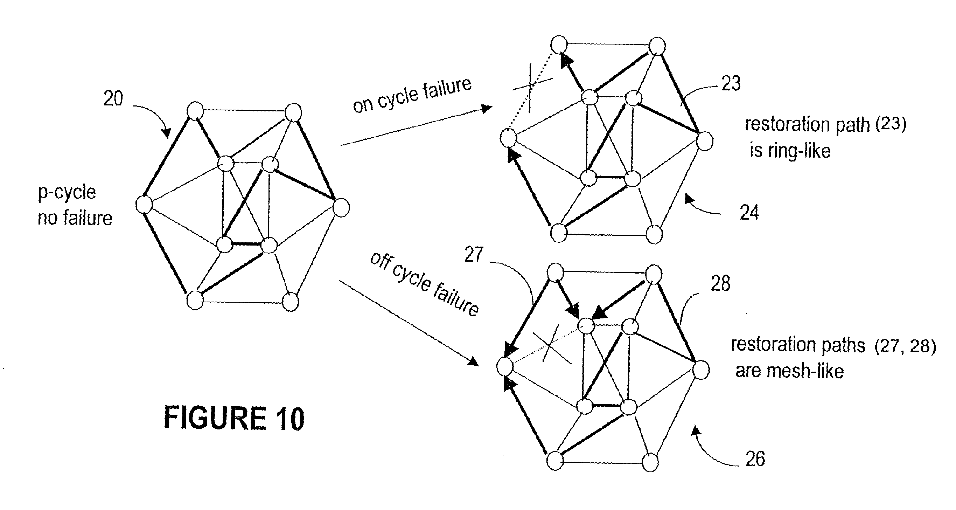

Figure 10 illustrates the diverse path restoration principle. When a wavelength path becomes unavailable due to link or node failure, the optical switch can quickly switch traffic to an alternate path. Such an alternate path can be established via signaling after the failure is detected, or it could be pre-configured in a planning phase in order to reduce the path switch-over time.

Such a network **20** provides for 100% restoration and can handle 'on-cycle' failures **24** and 'off-cycle' failures **26.** For the on-cycle failures, the protection path is ring-like single path **23.** For off-cycle failures the protection is mesh-like and can be implemented on alternative paths **27, 28.**

Various switch-over methods may be used for rapid path restoration. Switch-over methods may be local if executed by the switch that detects the failure, or remote if executed by the source node of the original path. According to the local switch-over method, once the switch has detected the failure, it can signal an alternate path around the failure and re-direct the traffic to the alternate path. This is similar to the P-cycles approach with the difference that the alternate path is re-signaled, not pre-computed.

If a remote switch-over method is issued, the failure notification can be cranked back to the original source node for re-directing the traffic on alternate paths and achieving bandwidth efficiency over protection speed.

There is a tradeoff between re-signaled, and pre-configured alternative paths. The former has the advantage of finding a new path without reserving bandwidth, but it may take a longer time for restoration, while the latter could provide fast protection but needs reserved bandwidth. According to the invention, a centralized policy-based, hybrid approach to protection and restoration, that achieves both speed and efficiency is provided.

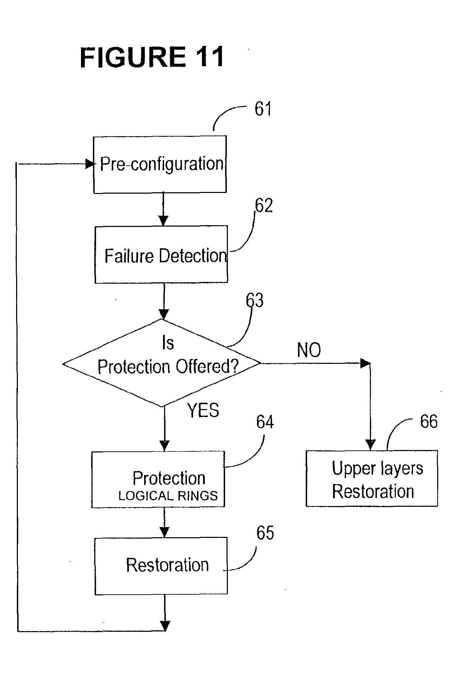

Figure 11 is a flow chart illustrating the two-stage, hybrid logical ring protection with rapid path restoration over mesh networks, according to the invention.

The two-stage protection/restoration method starts at step **61** by pre-configuring the logical rings. The P-cycle planner collects the actual network topology and bandwidth availability information from the optical network, and then computes the logical rings to be used for protection purposes (the wavelength routes). The smart agents configure the protection logical rings associated with each optical switch.

When a failure is detected in step **62,** the network determines in step **63** whether or not protection is offered at the physical layer. If no protection is offered at the physical layer, a notification is sent to the upper layers requesting service layer restoration, step **66.**

If protection is offered (step **63**), ring-like protection procedures are initially performed in step **64,** and a protection path is identified.

For an "on-cycle" failure (see Figure 10), the two end-nodes of the failed link will put traffic into a P-cycle and assuming bidirectional connectivity, the damaged traffic is re-routed into the shortest path in a direction away from the failure.

When an "off-cycle" link failure is detected, smart agents running on each optical switch are signalling service requests to all intermediate nodes located on the pre-configured P-cycles between the two end-nodes of the failed link. After receiving the service request, the optical switch associated with each intermediate node will conduct cross-connect routing and resource allocation for the damaged traffic. As discussed before in connection with the P-cycles method, for each failed straddling link there must be at least two alternate paths for protection purposes in mesh networks. The pre-configured alternate paths can avoid routing loops.

After the optical layer protection secures an alternate path for the affected traffic, it notifies the service layer of the changes and the service layer starts a restoration operation, step **65.** The restoration operation begins with smart agents sending out link state change notifications flooding through the network. After receiving notification, each switch re-calculates the routing path, creates new globally optimized paths, and dynamically sets up and maintains connections for re-routing the affected traffic into a new globally optimized path. All nodes being affected by the failure will re-calculate and re-configure the new globally optimized restoration paths via the WDP protocol, and eventually will re-direct the traffic into such a new path.

Based on a central policy, the required restoration bandwidth will be estimated on all links in order to distribute the damaged traffic by a failed link to the remaining operational links connected to the end-nodes and included in the optimized path. Re-distribution of the damaged traffic from the pre-configured protection logical path to the new globally optimized path is based on simple node connectivity rules. The links which can not provide the service requested are identified. The restoration bandwidth is then increased on those links requiring additional resources to ensure that all admitted traffic is served responsive to the type of service required.

When all traffic has been switched into the new globally optimized path, the protection logical ring as well as the original communications path are released, and the P-cycle planner starts to re-configure a new set of protection logical rings based on the new topology and the available bandwidth. Thus, a new set of logical rings is ready for use when the next failure occurs.

A system and a method of combining logical ring protection and mesh restoration mechanisms for recovery from link and node failures in optical networks was disclosed. Logical rings, or pre-configured protection cycles are defined over the physical mesh optical network for protection purposes, and they are operational only in transient time. A Wavelength Routing Protocol (WRP) and a Wavelength Distribution Protocol (WDP) have been devised to support network-wide routing and signalling. When a switch detects a link failure, the traffic being protected is bridged to the logical ring first, then the switch sends failure notifications to all the other nodes via the WRP. After receiving notification, all nodes being affected by the failure re-calculate and re-configure new globally optimized restoration paths via the WDP protocol, to eventually re-direct the traffic into such a new path. Node failure is addressed through a diversity path restoration operation. By combing logical ring protection and mesh path restoration, both fast protection speed and bandwidth efficiency are achieved.
Numerous modifications, variations, and adaptations may be made to the particular embodiments of the invention without departing from the scope of the invention which is defined in the claims.

## Claims

1. A method of restoring the traffic in synchronous optical networks by dynamically reconfiguring the cross connect when a transmission failure occurs between the end-nodes of a transmission link in a communications path, said method comprising the steps of:
a) configuring protection logical rings for dividing said network in a plurality of protection sub-networks such that each node of said network is ascribed to at least one protection logical ring;
b) said end-nodes activating said ascribed protection logical ring whenever said failure occurs and dynamically routing the damaged traffic into said ascribed protection logical ring; and
c) performing centrally controlled network-wide restoration by calculating new globally optimised restoration paths for re-directing the damaged traffic into a new path selected from said globally optimised restoration paths.

2. A method according to claim 1 further comprising
d) configuring new protection logical rings based on new network topology and bandwidth availability updates.

3. A method according to claim 1 or claim 2 wherein said step of configuring protection logical rings comprises the sub-steps of:
a1) collecting network topology and bandwidth availability information;
a2) configuring, based on said information, said protection sub-networks to contain an ascribed protection logical ring for on-cycle failures, and at least two ascribed protection logical rings for off-cycle failures.

4. A method according to claim 3 wherein said step of collecting information is centrally performed according to a wavelength routing protocol (WRP) for supporting network-wide on demand routing.

5. A method according to any of claims 1 to 4 wherein said protection sub-networks include a diversity of protection logical rings for recovering from both link and node failures.

6. A method according to any of claims 1 to 5 wherein said step of activating said ascribed logical ring by said end-nodes comprises the sub-steps of:
b1) sending signalling requests to intermediate nodes of said ascribed protection logical ring for requesting protection bandwidth according to the service requirements;
b2) identifying links along said ascribed protection logical ring which can not satisfy said service requirements;
b3) allocating said protection bandwidth based on said service requirements.

7. A method according to any of claims 1 to 6 wherein said step of performing centrally controlled restoration comprises the sub-steps of:
c1) sending failure notifications to all nodes of said network; and
c2) calculating said globally optimised restoration paths for said network.

8. A method according to claim 7 further comprising the sub-step of:
c3) releasing connections associated with both said communications path and said ascribed protection logical ring.

9. A method according to claim 8 wherein said steps of calculating said globally optimised restoration paths and releasing connections for said protection rings are centrally performed according to a wavelength distribution protocol (WDP).

10. An optical network for dynamically reconfiguring the cross connect when a transmission failure occurs between the end-nodes of a transmission link in a communications path, comprising:
a protection cycles planner (P-planner) configuring protection logical rings for dividing said network in a plurality of protection sub-networks such that each node of said network is ascribed to at least one protection logical ring, and performing network-wide restoration by calculating new globally optimised restoration paths for redirecting the damaged traffic into a new path selected from said globally optimised restoration paths; and
an optical switch including smart agents for interpreting said P-planner configurations and co-ordinating connection management for activating said ascribed protection logical ring whenever said failure occurs and dynamically routing the damaged traffic into said ascribed protection logical ring.

11. A network according to claim 10 wherein said optical switch also provides information regarding path changes, traffic fluctuations, bandwidth brokering, and quality of service (QoS) policy.

12. A fast wavelength switch (FWS) for a smart optical DWDM transport network carrying traffic between data terminals of a service network, comprising:
an optical cross-connect (OXC) for directing incoming and outgoing traffic on a plurality of links according to a provisioned connectivity plan;
an optical network-to-network interface (ONNI) for dynamically reconfiguring said connectivity plan according to the current operating conditions of said network; and
an optical user-network interface (O-UNI) for inter-working between said transport network and said service network.

13. A FWS according to claim 12 wherein said ONNI comprises a topology database for storing network wide topology information; a route determination unit for establishing a new route for traffic affected by a fault; and a topology exchange unit for exchanging routing information with other FWSs.

14. A FWS according to claim 12 or claim 13 wherein said O-UNI comprising an O-UNI signalling unit for exchanging service information with said service network; a connection management unit for allocating a wavelength to a route and a wavelength distribution signalling unit for indicating to the other FWSs the current information on the wavelength distribution.

15. A smart optical DWDM transport network for carrying traffic between data terminals of a service network, comprising:
a plurality of fast wavelength switches FWS for providing full connectivity between said data terminals;
a distributed routing plane for dynamically reconfiguring said FWS based on the current operating conditions of said network; and
a distributed connection management plane for wavelength distribution and inter-working with said service network.

16. A smart optical DWDM transport network according to claim 15 wherein said routing plane operates according to a wavelength routing protocol (WRP) based on open shortest path first (OSPF) routing protocol.

17. A smart optical DWDM transport network according to claim 16 wherein said WRP comprises a route determination component for obtaining link state advertisement (LSA) information regarding the routes available for a service; and a route allocating component for selecting a route corresponding to a type of service request.

18. A smart optical DWDM transport network according to claim 16 or claim 17 wherein said WRP provides optical network physical level protection and restoration for recovery from link and node failures.

19. A smart optical DWDM transport network according to any of claims 16 to 18 wherein said WRP complements the optical physical layer linear, ring, and mesh protection methods.

20. A smart optical DWDM according to claim 17 wherein said type of service request comprises a request for a connection between a source and a destination address, and the capacity for said connection.

21. A smart optical DWDM according to claim 20 wherein said type of service request further comprises at least one of the cost for the connection, a minimum delay, a preferred route, and an optimised route.

22. A smart optical DWDM transport network according to any of claims 15 to 21 wherein said connection management plane operates according to a wavelength distribution protocol (WDP) based on multi-protocol label switching/label distribution protocol (MPLS/LDP).

23. A smart optical DWDM transport network according to claim 22 wherein said WDP is a signalling protocol for setting-up, maintaining and releasing wavelengths paths in said optical network.

24. A smart optical DWDM transport network network according to claim 22 or claim 23 wherein said WDP groups and maps wavelengths in label banding according to combinations of destination addresses and said type of service requests.

25. A distributed smart wavelength switch for serving a data communication network comprising:
a transport network with fast wavelength switches placed at the nodes of said communication network, for providing full physical connectivity between said nodes; and
a distributed node controller for reconfiguring connectivity of said fast wavelength switches.

26. A data network architecture comprising:
a service network for establishing full connectivity between a plurality of data terminals;
a transport network including a plurality of fast wavelength switches placed at the nodes of said data network and a distributed controller for reconfiguring connectivity of said fast wavelength switches; and
a distributed network user interface for service and transport network inter-working.

27. A node for a data network comprising:
a data terminal with input and output ports for receiving, transmitting and processing services for local users:
a fast wavelength switch for receiving incoming traffic, directing local traffic to said data terminal and passing through traffic destined to other data terminals; and
a network user interface for service and transport network interworking;
wherein said data terminal is bypassed by the traffic destined to other data terminals.
